# EUROPÄISCHE PATENTSCHRIFT

(11) **EP 4 066 704 B1**
(45) Veröffentlichungstag und Bekanntmachung des Hinweises auf die Patenterteilung: **26.03.2025**
(21) Anmeldenummer: 22164679.7
(22) Anmeldetag: 28.03.2022
(51) Int. Cl.: A47J 37/07

(54) **GRILL**
BARBECUE
GRIL

(30) Priorität: 29.03.2021 DE 102021203142
(43) Veröffentlichungstag der Anmeldung: 05.10.2022
(73) Patentinhaber: Fraunhofer-Gesellschaft zur Förderung der angewandten Forschung e.V., 80686 München (DE)
(72) Erfinder: Aleysa, Mohammadshayesh, 70569 Stuttgart (DE)
(74) Vertreter: Friese Goeden Patentanwälte PartGmbB

(56) Entgegenhaltungen:
- CZ-U1- 29 620
- DE-A1- 102016 114 792
- KR-A- 20040 056 160
- KR-B1- 101 566 266
- KR-U- 20080 003 993
- KR-U- 20120 007 530
- US-A- 4 593 676
- US-A- 5 431 093
- US-A- 5 918 536
- US-A1- 2012 070 556
- US-A1- 2013 213 242
- US-A1- 2017 102 149
- US-A1- 2018 146 825

## Beschreibung

Die Erfindung betrifft einen Grill mit zumindest einem Aufnahmebehälter, welcher zur Aufnahme eines Brennstoffes eingerichtet ist. Ein Grill der eingangs genannten Art kann zum Garen von Lebensmitteln eingesetzt werden.

Aus der Praxis ist bekannt, einen Aufnahmebehälter aus feuerfestem Material vorzusehen, in welchen ein Brennstoff eingefüllt und nachfolgend entzündet werden kann. Als fester Brennstoff kann beispielsweise Holzkohle, Holzkohlebrikett oder auch Scheitholz verwendet werden. Grillgut, beispielsweise Fisch, Fleisch oder auch Gemüse, kann sodann über dem so entstehenden Glutbett gegart werden.

Dieser bekannte Grill weist den Nachteil auf, dass vom Grillgut abtropfendes Fett im Glutbett zu Fettbrand führt und dadurch das Grillgut beeinträchtigt wird. Insbesondere können beim Grillen kanzerogene Stoffe entstehen. Darüber hinaus werden Gerüche, Schadstoffe und Feinstäube in die Atmosphäre ausgetragen und führen zur Belästigung von Anwohnern und Passanten. Begrenzte Lösungsansätze für diese Problematik finden sich in den Dokumenten US5918536A und US5431093A aufweisend jeweils eine Grillguthaltevorrichtung und beiderseits angeordnete Aufnahmebehälter mit denen jeweils funktional zugeordnetem Deckel, der unterhalb und seitlich versetzt von der Grillguthaltevorrichtung angeordnet ist.

Ausgehend vom Stand der Technik liegt der Erfindung daher die Aufgabe zugrunde, eine Vorrichtung zum Garen anzugeben, welche eine geringere Umweltbelastung aufweist und welche dazu geeignet ist, Lebensmittel mit verbessertem Geschmack und/oder niedrigerem Schadstoffgehalt bereitzustellen.

Die Aufgabe wird erfindungsgemäß durch einen Grill gemäß Anspruch 1 gelöst. Vorteilhafte Weiterbildungen der Erfindung finden sich in den Unteransprüchen.

Erfindungsgemäß wird ein Grill mit zumindest einem Aufnahmebehälter vorgeschlagen. Der Aufnahmebehälter kann aus einem Metall, einer Legierung oder einer Keramik gefertigt sein. Beispielsweise kann der Aufnahmebehälter aus Stahlblech, Edelstahl, einer Oxidkeramik und/oder Schamotte gefertigt sein. Die Wandungen des Aufnahmebehälters umgrenzen einen Aufnahmeraum, welcher zur Aufnahme zumindest eines Brennstoffes eingerichtet ist.

Der im Grill verwendbare Brennstoff kann beispielsweise ein fester Brennstoff sein, insbesondere Holzkohle oder Holzkohlebriketts. In anderen Ausführungsformen der Erfindung kann auch ein anderer fester Brennstoff verwendbar sein, beispielsweise Scheitholz, Tierdung oder Holzpellets. In wiederum anderen Ausführungsformen der Erfindung kann im Aufnahmeraum des Aufnahmebehälters ein Gas-, Benzin- oder Ölbrenner angeordnet werden. Bei Betrieb des Grills wird der Brennstoff innerhalb des Aufnahmebehälters exotherm umgesetzt, wodurch Wärme freigesetzt wird.

Erfindungsgemäß wird nun vorgeschlagen, dass der zumindest eine Aufnahmebehälter einen Deckel aufweist. Der Deckel kann wiederum aus einem Metall oder einer Legierung oder einer Keramik gefertigt sein. Der Deckel schließt den Aufnahmebehälter nach oben ab, sodass von oben, der Schwerkraft folgend, keine festen oder flüssigen Stoffe in den Aufnahmebehälter eindringen können. Abgase werden unterhalb des Deckels geführt, so dass diese nicht auf das Grillgut einwirken können.

Das Grillgut wird mittels einer Grillguthaltevorrichtung seitlich und oberhalb des Aufnahmebehälters versetzt angeordnet und der vom Aufnahmebehälter ausgehenden Infrarotstrahlung ausgesetzt. Vom Grillgut abtropfendes Fett kann jedoch aufgrund des Deckels nicht in den Aufnahmeraum des Aufnahmebehälters gelangen, sodass die Entstehung eines Fettbrandes oder der Austrag von Feinstäuben aus dem Aufnahmebehälter ausgeschlossen oder reduziert ist. Hierzu ist die Grillguthaltevorrichtung dazu eingerichtet, das Grillgut oberhalb der durch den bzw. die Deckel definierten Ebene zu positionieren. Dies erlaubt einen einfachen Zugriff des Bedienpersonals und eine einfache optische Garkontrolle.

Der erfindungsgemäße Grill enthält eine Mehrzahl, nämlich 5 bis 30, von den genannten Aufnahmebehältern, welche beabstandet zueinander angeordnet sind. Hierdurch kann die thermische Leistung und/oder die zur Verfügung stehende Grillfläche vergrößert sein, sodass Grillgut in kürzerer Zeit und/oder in größerer Menge gegart werden kann. Die jeweils zugeordneten Deckel der Mehrzahl von Aufnahmebehältern können im Wesentlichen plan ausgeführt sein und sich innerhalb einer gemeinsamen Ebene befinden. Hierdurch kann weiteres Kochgeschirr auf die Deckel gestellt und dadurch beheizt werden. Der erfindungsgemäße Grill erlaubt somit einerseits das Grillen mit Strahlungswärme und andrerseits das Warmhalten, Braten und Kochen durch direkten Wärmeübergang.

In einigen Ausführungsformen der Erfindung kann zwischen benachbarten Aufnahmebehältern ein Wasser- oder Sandbad angeordnet sein. Das Wasser- oder Sandbad kann dazu eingerichtet sein, bei Betrieb des Grills vom Grillgut abtropfendes Fett aufzunehmen, sodass dieses leicht aus dem Grill entfernt werden kann. Darüber hinaus kann das Wasser-oder Sandbad die im abtropfenden Fett enthaltene Wärme abführen, sodass ein Fettbrand zuverlässig verhindert wird. In einigen Ausführungsformen der Erfindung kann der Deckel eine katalytische Beschichtung aufweisen. Eine solche katalytische Beschichtung kann insbesondere einen Metallkatalysator oder ein Oxid enthalten. Hierdurch können vom Grillgut und/oder dem Brennstoff ausgehende schadstoffhaltige Gase und Dämpfe an der Oberfläche des Deckels katalytisch umgesetzt werden, sodass die Schadstoffemissionen des Grills weiter reduziert werden. In einigen Ausführungsformen der Erfindung kann der Katalysator ausgewählt sein aus Platin und/oder Vanadium und/oder Rhodium und/oder Titandioxid. Der Katalysator kann dazu eingerichtet sein, gasförmige Schadstoffe, wie beispielsweise CO, CHₓ, polyzyklische aromatische Kohlenwasserstoffe, Benzole, Toluole, Ethylbenzol oder Xylole zu oxidieren.

Erfindungsgemäß ist im Zwischenraum zwischen benachbarten Aufnahmebehältern jeweils eine genannte Grillguthaltevorrichtung angeordnet. Die Anordnung des Grillgutes neben dem Aufnahmebehälter stellt sicher, dass abtropfendes Fett oder herunterfallendes Grillgut nicht mit dem Aufnahmebehälter bzw. dem Deckel des Aufnahmebehälters in Kontakt kommt und hierdurch nicht unter Freisetzung schadstoffhaltiger Gase und Dämpfe verbrennt. Die Grillguthaltevorrichtung kann beispielsweise dazu eingerichtet sein, einen Grillrost und/oder zumindest einen Spieß aufzunehmen. Ein solcher Spieß kann in einigen Ausführungsformen der Erfindung manuell oder motorisch drehbar sein. In anderen Ausführungsformen der Erfindung kann der Spieß einen flachen, beispielsweise ovalen oder rechteckigen Querschnitt aufweisen, sodass dieser in der Grillguthaltevorrichtung nicht rotiert und das Grillgut in einer definierten Position gehalten wird. Zumindest die Drehachse des Spießes kann sich oberhalb der durch den bzw. die Deckel definierten Ebene befinden.

In einigen Ausführungsformen der Erfindung kann in zumindest einer Seitenwand des Aufnahmebehälters zumindest eine Belüftungsöffnung vorhanden sein. Hierdurch kann dem im Aufnahmeraum des Aufnahmebehälters angeordneten Brennstoff ein gasförmiges Oxidationsmittel zugeführt werden, beispielsweise Umgebungsluft.

In einigen Ausführungsformen der Erfindung kann der Aufnahmebehälter zumindest eine Ascheentnahmevorrichtung aufweisen. Die Ascheentnahmevorrichtung kann unterhalb des zur Aufnahme des Brennstoffes vorgesehenen Aufnahmeraums angeordnet sein. Die Ascheentnahmevorrichtung kann beispielsweise die Form einer Schublade aufweisen, sodass die Reste des Brennstoffes in einfacher Weise aus dem Aufnahmebehälter entnehmbar sind.

In einigen Ausführungsformen der Erfindung kann der Aufnahmebehälter eine Länge von etwa 30 cm bis etwa 100 cm aufweisen. In anderen Ausführungsformen der Erfindung kann ein Aufnahmebehälter eine Länge von etwa 30 cm bis etwa 60 cm aufweisen. Hierdurch kann der Aufnahmebehälter beispielsweise parallel zu einem Spieß angeordnet sein. In Abhängigkeit der Länge des Aufnahmebehälters kann die Länge des Spießes so gewählt sein, dass dieser beispielsweise eine kleine, für eine Person bestimmte Menge eines Grillgutes aufnimmt. Ein längerer Aufnahmebehälter erlaubt die Verwendung längerer Spieße, welche beispielsweise auch mehrere Hühner oder ein Spanferkel oder ein Lamm vollständig aufnehmen können.

In einigen Ausführungsformen der Erfindung kann der erfindungsgemäße Grill weiterhin ein Gehäuse enthalten. Auch das Gehäuse kann aus einem Metall, einer Legierung oder einem mineralischen Material oder einer Keramik gefertigt sein. Beispielsweise kann das Gehäuse aus Stahlblech, Edelstahl oder Schamotte gefertigt werden. Das Gehäuse kann dazu eingerichtet sein, eine Mehrzahl von Aufnahmebehältern sowie optional ein Wasser- oder Sandbad zwischen den Aufnahmebehältern sowie eine Grillguthaltevorrichtung aufzunehmen. Auf diese Weise kann der Grill mit dem Gehäuse leicht transportiert werden. Darüber hinaus kann ein solcher Grill vorhandene, an sich bekannte Grillstationen ersetzen, indem das Gehäuse anstelle des bisherigen Glutbettes in eine am Aufstellort vorhandene Esse bzw. einen Kamin eingesetzt wird.

In einigen Ausführungsformen der Erfindung kann das Gehäuse zumindest eine Luftkanal enthalten. Ein solcher Luftkanal kann unterhalb der Aufnahmebehälter bzw. unterhalb des Wasser- oder Sandbades verlaufen. Hierdurch können auch innenliegende Aufnahmebehälter in einfacher Weise mit der notwendigen Verbrennungsluft versorgt werden. Alternativ oder zusätzlich kann der Luftkanal auch zur Abfuhr der Verbrennungsabgase verwendet werden. Hierzu kann der Luftkanal mehrflutig ausgeführt werden.

Der Luftkanal kann in einigen Ausführungsformen eine Mehrzahl von Abgängen bzw. Öffnungen aufweisen, welche jeweils in zumindest einen Aufnahmebehälter münden. Hierdurch kann die zur Verbrennung erforderliche Zuluft den Aufnahmebehältern gezielt zugeführt werden.

In einigen Ausführungsformen der Erfindung kann der Luftkanal mit einer oder einer Mehrzahl von Drosselklappen und/oder zumindest einem Lüfter ausgestattet sein. Dies erlaubt es, die zugeführte Luftmenge zu allen oder zu einzelnen Aufnahmebehältern gezielt zu steuern oder zu regeln. Hierdurch kann die umgesetzte Brennstoffmenge und dadurch die Heizleistung und die Temperatur an die jeweilige Koch- oder Grillaufgabe angepasst werden.

In einigen Ausführungsformen der Erfindung können die Verbrennungsabgase unterhalb des Deckels geführt werden. Dadurch kann die in den Abgasen enthaltene Wärmeenergie an den Deckel abgegeben werden, sodass eine effiziente Verwertung des Brennstoffes ermöglicht wird. Darüber hinaus wird ein unkontrollierter Austritt der Verbrennungsabgase vermieden, sodass diese nicht mit dem Grillgut in Kontakt kommen. Das Grillgut wird somit durch Strahlungswärme sanft gegart. Die Einwirkung von Stäuben und Abgasen auf das Grillgut wird vermieden.

In einigen Ausführungsformen der Erfindung kann der Aufnahmebehälter eine Breite von etwa 5 cm bis etwa 20 cm oder von etwa 10 cm bis etwa 15 cm aufweisen. Dies erlaubt es, die Aufnahmebehälter in einem Abstand von etwa 10 cm bis etwa 30 cm anzuordnen, sodass der in der Breite beschränkte Bauraum optimal für das Grillgut genutzt werden kann, ohne dass vom Grillgut abtropfendes Fett auf die Aufnahmebehälter bzw. deren Deckel trifft. Hierzu kann der Abstand zwischen benachbarten Aufnahmebehältern zwischen etwa 5 cm und etwa 30 cm oder zwischen etwa 10 cm und etwa 25 cm betragen.

In einigen Ausführungsformen der Erfindung kann der Grill eine Länge von etwa 2 bis etwa 5 oder von etwa 1,5 bis etwa 4 m aufweisen. In Schwachlastzeiten, wenn nur wenig Grillgut zubereitet werden soll, kann auf nur ein Teil der Aufnahmebehälter mit Brennstoff versehen werden, sodass von einem vergleichsweise großen Grill auch nur ein Teil in Betrieb genommen werden kann. Dieses Vorgehen erlaubt es auch, einen Teil des Grills zur Zubereitung von Lebensmitteln zu betreiben und einen anderen Teil des Grills für die zukünftige Benutzung vorzubereiten, sodass zu jeder Zeit ein Teil der Grillfläche zur Verfügung steht und ein anderer Teil der Grillfläche gewartet wird.

Nachfolgend soll die Erfindung anhand von Figuren ohne Beschränkung des allgemeinen Erfindungsgedankens näher erläutert werden. Dabei zeigt
Figur 1 eine axonometrische Darstellung einer Ausführungsform des erfindungsgemäßen Grills.
Figur 2 zeigt einen Längsschnitt des in Figur 1 dargestellten Grills.
Figur 3 zeigt einen ersten, zu Figur 2 orthogonalen Schnitt.
Figur 4 zeigt einen zweiten, zu Figur 2 orthogonalen Schnitt.

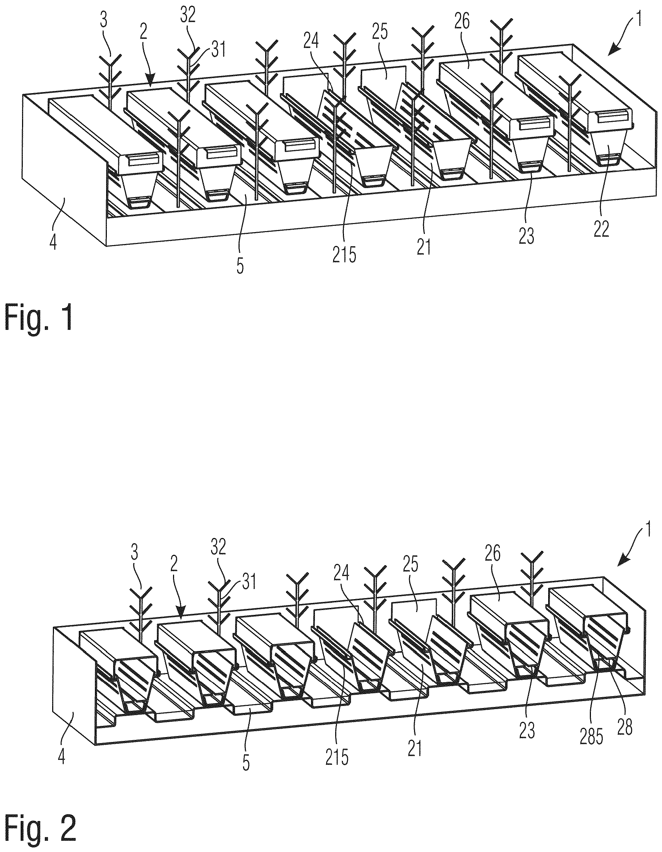

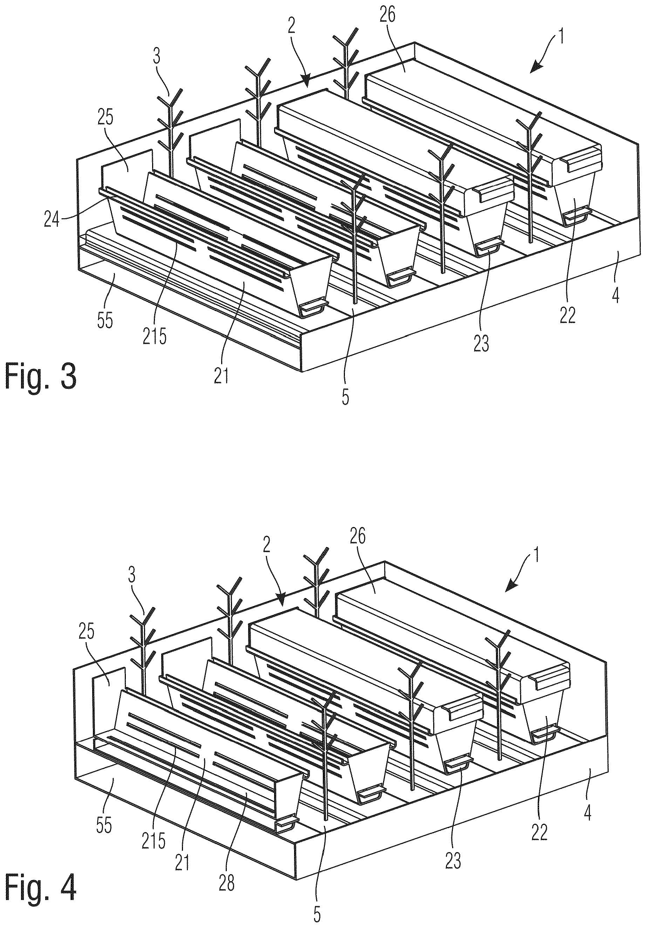

Anhand der Figuren 1 bis 4 wird ein Ausführungsbeispiel eines erfindungsgemäßen Grills 1 näher erläutert. Dabei zeigt Figur 1 eine axonometrische Darstellung und die Figuren 2, 3 und 4 verschiedene Schnitte. Gleiche Bestandteile der Erfindung sind in sämtlichen Figuren mit gleichen Bezugszeichen versehen, sodass in der nachfolgenden Beschreibung nicht für sämtliche Figuren sämtliche Merkmale beschrieben werden müssen.

Der erfindungsgemäße Grill 1 weist ein Gehäuse 4 auf. Das Gehäuse 4 kann aus einem feuerfesten Material hergestellt sein, beispielsweise einem Stahlblech, Edelstahl, Keramik, Schamotte oder Ziegel. Das Gehäuse 4 dient der Aufnahme der übrigen Bestandteile des Grills 1, sodass der Grill 1 leicht transportierbar ist oder als Ersatz für ein bekanntes, offenes Glutbett in eine bauseits bereits vorhandene Esse bzw. einen Kamin eingesetzt werden kann. Das Gehäuse 4 kann aus mehrerer Einzelteilen zusammengesetzt sein, welche in an sich bekannter Weise durch Schrauben, Löten, Schweißen, Steckverbindung oder Nieten miteinander verbunden sind.

Das Gehäuse 4 kann einen polygonalen, insbesondere viereckigen Grundriss aufweisen. Die Tiefe des Gehäuses 4 entspricht der Länge bzw. Tiefe der das Grillgut aufnehmenden Grillroste bzw. Spieße und der Länge der Aufnahmebehälter 2 und kann beispielsweise zwischen etwa 30 cm bis etwa 100 cm oder zwischen etwa 35 cm und etwa 60 cm gewählt sein. Die Breite des Gehäuses 4 kann in einigen Ausführungsformen der Erfindung zwischen etwa 1 m und etwa 4 m gewählt sein.

Wie in den Figuren 2, 3 und 4 ersichtlich ist, befindet sich im unteren Teil des Gehäuses 4 ein Luftkanal 55. Dieser kann dazu eingerichtet sein, Verbrennungsluft zu den Aufnahmebehältern 2 zu leiten. Alternativ oder zusätzlich kann der Luftkanal 55 auch zur Abgasführung verwendet werden. Hierzu kann der Luftkanal 55 mehrflutig, insbesondere zweiflutig, ausgeführt sein. Schließlich kann der Luftkanal 55 zur thermischen Entkopplung des Bodens 41 des Gehäuses 4 dienen, sodass die Aufstellfläche des Grills 1 vor hohen Temperaturen geschützt ist und Beschädigungen vermieden oder verringert werden.

Der Luftkanal 55 kann in einigen Ausführungsformen eine Mehrzahl von Abgängen bzw. Öffnungen aufweisen, welche jeweils in zumindest einen Aufnahmebehälter 2 münden. Hierdurch kann die zur Verbrennung erforderliche Zuluft den Aufnahmebehältern gezielt zugeführt werden. In einigen Ausführungsformen der Erfindung kann der Luftkanal 55 mit einer oder einer Mehrzahl von Drosselklappen und/oder zumindest einem Lüfter ausgestattet sein. Dies erlaubt es, die zugeführte Luftmenge zu allen oder zu einzelnen Aufnahmebehältern 2 gezielt zu steuern oder zu regeln. Hierdurch kann die umgesetzte Brennstoffmenge und dadurch die Heizleistung und die Temperatur an die jeweilige Koch-oder Grillaufgabe angepasst werden.

Das Gehäuse 4 ist oben und optional auch vorne, in Richtung des Bedieners, zumindest teilweise offen gestaltet.

Innerhalb des optionalen Gehäuses 4 befindet sich zumindest ein Aufnahmebehälter 2. Im dargestellten Ausführungsbeispiel enthält der Grill 1 sieben Aufnahmebehälter 2, welche in etwa parallel zueinander und beabstandet im Gehäuse 4 eingesetzt sind. In anderen Ausführungsformen der Erfindung kann die Anzahl der Aufnahmebehälter größer oder geringer sein.

Jeder Aufnahmebehälter weist zwei Seitenflächen 21 und zwei Stirnwände 22 auf, sodass der Aufnahmebehälter 2 eine in etwa rechteckige Grundform aufweist. Die Seitenwände 21 können geneigt sein, sodass der Querschnitt ausgehend vom Boden nach oben hin zunimmt.

Die Seitenwände 21 können zumindest eine optionale Belüftungsöffnung 215 aufweisen. Im dargestellten Ausführungsbeispiel weist jede Seitenwand vier Belüftungsöffnungen auf, welche in Form eines länglichen Schlitzes in die Seitenwand eingearbeitet sind. Seiten- und Stirnwände 21 und 22 können beispielsweise aus Stahlblech oder aus Edelstahl gefertigt sein.

Im Bodenbereich kann eine optionale Ascheentnahmevorrichtung 23 vorhanden sein. Die Ascheentnahmevorrichtung ist nach Art einer Schublade gestaltet und kann nach vorne über die Stirnwand 22 herausgezogen werden, um die Ascheentnahmevorrichtung zu entleeren.

Die Seitenwände und die Stirnwände begrenzen einen Aufnahmeraum 25, in welchem im dargestellten Ausführungsbeispiel ein fester Brennstoff eingebracht werden kann, beispielsweise Holzkohle oder Holzkohlebriketts oder Holzpellets. Nach unten ist der Aufnahmeraum 25 zur Ascheentnahmevorrichtung 23 durch ein Bodenblech 28 begrenzt. Im Bodenblech kann eine Ausnehmung 285 eingebracht werden, welche es erlaubt, die Asche aus dem Aufnahmeraum 25 zu entfernen und diese der Ascheentnahmevorrichtung 23 zuzuführen.

Nach oben ist jeder Aufnahmebehälter 2 mit einem Deckel 26 versehen, welcher in eine am oberen Rand der Seitenwand 21 ausgebildete Nut 24 eingreift. Der Deckel 26 kann seinerseits aus einem Metall oder einer Legierung oder einer Keramik gefertigt sein, sodass dieser der bei Betrieb des Grills 1 auftretenden erhöhten Temperatur standhalten kann. Rauchgase, welche bei der Oxidation des Brennstoffes im Aufnahmeraum 25 der Aufnahmebehälter 2 entstehen, werden unterhalb des Deckels 26 abgeleitet, sodass diese aus dem Aufnahmebehälter 2 nicht nach oben entweichen. Hierzu kann in der Nut 24 eine Dichtung eigearbeitet sein. Dies vermeidet, dass Rauchgase oder Stäube mit dem Grillgut in Kontakt kommen.

Die Außenseite des Deckels 26 kann mit einer katalytisch wirksamen Beschichtung versehen sein. Ein solcher Katalysator kann ein Metallkatalysator oder ein Oxidkatalysator sein. Beispielsweise kann der Katalysator ausgewählt sein aus Platin und/oder Vanadium und/oder Rhodium und/oder Titandioxid. Der Katalysator kann dazu eingerichtet sein, gasförmige Schadstoffe, wie beispielsweise CO, CHₓ, polyzyklische aromatische Kohlenwasserstoffe, Benzole, Toluole, Ethylbenzol oder Xylole zu oxidieren. Auf diese Weise werden Schadstoffe, welche während des Grillvorganges entstehen, unschädlich gemacht. Diese gelangen somit nicht in die Atmosphäre.

Die einzelnen Aufnahmebehälter können eine Breite von etwa 5 cm bis etwa 20 cm oder von etwa 10 cm bis etwa 15 cm aufweisen. Die Aufnahmebehälter 2 sind parallel und beabstandet zueinander im Gehäuse 4 aufgenommen, wobei zwischen benachbarten Aufnahmebehältern jeweils ein Wasser- oder Sandbad 5 angeordnet ist. Oberhalb des Sand- oder Wasserbades 5 kann das Grillgut an zumindest einer Grillguthaltevorrichtung 3 aufgenommen werden. Im dargestellten Ausführungsbeispiel enthält die Grillguthaltevorrichtung 3 jeweils einen senkrecht verlaufenden Pfosten 31, an welchem sich Haltearme 32 befinden. Auf diese Weise kann zwischen jeweils einer vorderen und einer hinteren Grillguthaltevorrichtung 3 ein Spieß eingehängt werden, welcher dann oberhalb des Wasser-oder Sandbades 5 positioniert ist. Die Grillguthaltevorrichtung 3 ist dazu eingerichtet, das Grillgut oberhalb der durch den bzw. die Deckel (26) definierten Ebene zu positionieren. Die von den Aufnahmebehältern 2 bzw. den Deckeln 26 ausgehende Infrarotstrahlung wirkt auf das Grillgut ein, sodass dieses gegart und gebräunt wird. Beim Grillvorgang abtropfendes Fett gelangt nicht in das in den Aufnahmebehältern 2 befindliche Glutbett, sondern tropft in das Wasser- oder Sandbett 5. Somit wird vermieden, dass sich abtropfendes Fett entzündet und beim Abbrand Schadstoffe und Feinstäube entstehen, welche in die Atmosphäre abgegeben werden. Das Wasser- oder Sandbad 5 kann nach Ende des Grillvorganges in an sich bekannter Weise einfach ausgetauscht werden, sodass eine Verschmutzung des Gehäuses 4 vermieden oder reduziert wird.

Durch den modularen Aufbau des Grills 1 kann die Grillfläche leicht an den Bedarf angepasst werden, indem nur einzelne Aufnahmebehälter 2 mit Brennstoff versehen werden. Darüber hinaus kann auf einem Teil des Grills Grillgut gegart werden, während ein anderer Teil des Grills für die zukünftige Verwendung vorbereitet oder gereinigt wird. Damit ist ein mehrstündiger ununterbrochener Betrieb möglich, sodass der erfindungsgemäße Grill insbesondere im gewerblichen bzw. gastronomischen Bereich einsetzbar ist.

Der erfindungsgemäße Grill erlaubt es, das Grillgut mit Strahlungswärme zu grillen, ohne dass Rauchgase und Stäube auf das Grillgut einwirken können oder unerwünschte Schwelbrände auftreten. Durch Steuerung oder Regelung der Luftzufuhr zu den Aufnahmebehältern kann die Heizleitung und damit die Temperatur eingestellt werden, so dass der Garvorgang gut kontrollierbar ist. Der erfindungsgemäße Grill erlaubt durch die räumliche Trennung von Strahlungswärme und Abgas schadstoffarmes Grillen.

Selbstverständlich ist die Erfindung nicht auf die dargestellten Ausführungsformen beschränkt. Die vorstehende Beschreibung ist daher nicht als beschränkend, sondern als erläuternd anzusehen.

## Patentansprüche

1. Grill (1) mit zumindest einem Aufnahmebehälter (2), welcher zur Aufnahme eines Brennstoffs eingerichtet ist,
wobei dem Aufnahmebehälter (2) funktional zumindest ein Deckel (26) zugeordnet ist und weiterhin eine Grillguthaltevorrichtung (3) vorhanden ist, welche dazu eingerichtet ist, das Grillgut oberhalb der durch den Deckel (26) definierten Ebene zu positionieren, **dadurch gekennzeichnet, dass** der Aufnahmebehälter (26) den zumindest einen Deckel (26) aufweist, der Grill (1) 5 bis 30 der genannten Aufnahmebehälter (2) aufweist, die beabstandet angeordnet sind, und
wobei in dem Zwischenraum zwischen benachbarten Aufnahmebehälter (2) jeweils eine genannte Grillguthaltevorrichtung (3) angeordnet ist.

2. Grill nach Anspruch 1, **dadurch gekennzeichnet, dass** zwischen benachbarten Aufnahmebehälter (2) ein Wasser- oder Sandbad (5) angeordnet ist.

3. Grill nach einem der Ansprüche 1 bis 2, **dadurch gekennzeichnet, dass** der Deckel (26) eine katalytische Beschichtung aufweist.

4. Grill nach einem der Ansprüche 1 bis 3, **dadurch gekennzeichnet, dass** der Aufnahmebehälter (2) einen Aufnahmeraum (25) enthält, welcher durch Seitenwände (21) und Stirnwände (22) begrenzt ist, wobei
zumindest eine Seitenwand (21) zumindest eine optionale Belüftungsöffnung (215) enthält.

5. Grill nach einem der Ansprüche 1 bis 4, weiterhin enthaltend zumindest eine Ascheentnahmevorrichtung (23)

6. Grill nach einem der Ansprüche 1 bis 5, **dadurch gekennzeichnet, dass** der Aufnahmebehälter (2) eine Länge von etwa 30 cm bis etwa 100 cm oder von etwa 35 cm bis etwa 60 cm aufweist

7. Grill nach einem der Ansprüche 1 bis 6, weiterhin enthaltend zumindest ein Gehäuse (4).

8. Grill nach Anspruch 7, **dadurch gekennzeichnet, dass** das Gehäuse (4) zumindest einen Luftkanal (55) enthält.

9. Grill nach Anspruch 8, **dadurch gekennzeichnet, dass** der Luftkanal (55) eine Mehrzahl von Abgängen bzw. Öffnungen aufweist, welche jeweils in zumindest einen Auf¬nahme¬be¬hälter (2) münden.

10. Grill nach einem der Ansprüche 8 oder 9, **dadurch gekennzeichnet, dass** der Luft-kanal mit zumindest einer Drosselklappe und/oder zumindest einem Lüfter ausgestattet ist.

11. Grill nach einem der Ansprüche 1 bis 10, **dadurch gekennzeichnet, dass** die Verbrennungsabgase unterhalb des Deckels (26) führbar sind.

12. Grill nach einem der Ansprüche 1 bis 11, **dadurch gekennzeichnet, dass** der Aufnahmebehälter (2) eine Breite von etwa 5 cm bis etwa 20 cm oder von etwa 10 cm bis etwa 15 cm aufweist.

## Claims

1. Barbecue (1) having at least one receiving container (2), which is designed to receive a fuel,
at least one cover (26) being functionally associated with the receiving container (2) and, furthermore, a holding device (3) for food to be grilled being present, which is designed to position the food to be grilled above the plane defined by the cover (26), **characterized in that** the receiving container (26) includes the at least one cover (26), the barbecue (1) includes 5 to 30 of the indicated receiving containers (2), which are arranged at a distance from one another, and
in each case one indicated holding device (3) for food to be grilled is arranged in the intermediate space between adjacent receiving containers (2).

2. Barbecue according to claim 1, **characterized in that** a water or sand bath (5) is arranged between adjacent receiving containers (2).

3. Barbecue according to any one of claims 1 to 2, **characterized in that** the cover (26) has a catalytic coating.

4. Barbecue according to any one of claims 1 to 3, **characterized in that** the receiving container (2) contains a receiving space (25), which is bounded by side walls (21) and end walls (22),
at least one side wall (21) containing at least one optional ventilation opening (215).

5. Barbecue according to any one of claims 1 to 4, further containing at least one ash removal device (23).

6. Barbecue according to any one of claims 1 to 5, **characterized in that** the receiving container (2) has a length of about 30 cm to about 100 cm or of 35 cm to about 60 cm.

7. Barbecue according to any one of claims 1 to 6, further containing at least one housing (4).

8. Barbecue according to claim 7, **characterized in that** the housing (4) contains at least one air duct (55).

9. Barbecue according to claim 8, **characterized in that** the air duct (55) has a plurality of outlets or openings, each of which opens into at least one receiving container (2).

10. Barbecue according to any one of claims 8 or 9, **characterized in that** the air duct is equipped with at least one throttle valve and/or at least one fan.

11. Barbecue according to any one of claims 1 to 10, **characterized in that** the combustion exhaust gases can be guided below the cover (26).

12. Barbecue according to any one of claims 1 to 11, **characterized in that** the receiving container (2) has a width of about 5 cm to about 20 cm or of about 10 cm to about 15 cm.

## Revendications

1. Barbecue (1) comprenant au moins un récipient de réception (2) conçu pour recevoir un combustible, dans lequel au moins un couvercle (26) est fonctionnellement associé au récipient de réception (2), et il est en outre prévu un dispositif de maintien d'aliments à griller (3) conçu pour positionner les aliments à griller au-dessus du plan défini par le couvercle (26),
**caractérisé en ce que** le récipient de réception (26) présente ledit au moins un couvercle (26), le barbecue (1) comprend 5 à 30 desdits récipients de réception (2) disposés à distance les uns des autres, et dans l'espace intermédiaire entre des récipients de réception (2) voisins est disposé respectivement un dit dispositif de maintien d'aliments à griller (3).

2. Barbecue selon la revendication 1,
**caractérisé en ce qu'**un bain d'eau ou de sable (5) est disposé entre des récipients de réception (2) voisins.

3. Barbecue selon l'une des revendications 1 à 2,
**caractérisé en ce que** le couvercle (26) présente un revêtement catalytique.

4. Barbecue selon l'une des revendications 1 à 3,
**caractérisé en ce que** le récipient de réception (2) comprend un espace de réception (25) délimité par des parois latérales (21) et par des parois frontales (22), au moins une paroi latérale (21) présentant au moins une ouverture de ventilation optionnelle (215).

5. Barbecue selon l'une des revendications 1 à 4, comprenant en outre au moins un dispositif d'extraction de cendres (23).

6. Barbecue selon l'une des revendications 1 à 5,
**caractérisé en ce que** le récipient de réception (2) présente une longueur d'environ 30 cm à environ 100 cm ou d'environ 35 cm à environ 60 cm.

7. Barbecue selon l'une des revendications 1 à 6, comprenant en outre au moins un boîtier (4).

8. Barbecue selon la revendication 7,
**caractérisé en ce que** le boîtier (4) comprend au moins un canal d'air (55).

9. Barbecue selon la revendication 8,
**caractérisé en ce que** le canal d'air (55) présente une pluralité de sorties ou d'ouvertures qui débouchent chacune dans au moins un récipient de réception (2).

10. Barbecue selon l'une des revendications 8 ou 9,
**caractérisé en ce que** le canal d'air est équipé d'au moins un clapet d'étranglement et/ou d'au moins un ventilateur.

11. Barbecue selon l'une des revendications 1 à 10,
**caractérisé en ce que** les gaz de combustion peuvent être guidés en dessous du couvercle (26).

12. Barbecue selon l'une des revendications 1 à 11,
**caractérisé en ce que** le récipient de réception (2) présente une largeur d'environ 5 cm à environ 20 cm ou d'environ 10 cm à environ 15 cm.
